# EUROPEAN PATENT APPLICATION

(11) **EP 2 753 057 A1**
(43) Date of publication of application: **09.07.2014**
(21) Application number: 12770651.3
(22) Date of filing: 27.03.2012
(51) Int. Cl.: H04N 1/21, H04N 5/76, H04N 5/775

(54) **MONITORING SYSTEM FOR REMOTELY SUPERVISING AND CONTROLLING CRITICAL OPERATIONS AND METHOD FOR DETECTING IMAGE FREEZING**

(30) Priority: 14.04.2011 ES 201130595
(71) Applicant: Adarve Lozano, Alberto, 28023 Madrid (ES)
(72) Inventor: Adarve Lozano, Alberto, 28023 Madrid (ES)
(74) Representative: López Bravo, Joaquin Ramón
(86) International application number: PCT/ES2012/070207
(87) International publication number: WO 2012/140294

(57) **Abstract**

Monitoring system for supervising and control of critical operations in remote and detection algorithm of image freezing consisting of a display of images from an array of sensors in real time with the ability to detect the freezing of some or all video signal input and to detect the failure or absence of video signal input to inform the operator by sound, indicative lights or overlays on the display as well as being able to select an alternative input video signal to prevent the operator from losing sight of the real world images being displayed or preventing a delay in the vision of such images. The invention also relates to an algorithm for performing the above functions based on the use of one or more computing units.

## Description

### FIELD OF INVENTION

The present invention relates to a video monitoring system in real-time for monitoring critical operations such as refueling or other remote control or supervision of operations where the lapse of time between the actual action and remote viewing is absolutely critical to the success of the operation.

### BACKGROUND

Currently the methods of conventional display for critical operations by remote control are based on the use of elements for presentations such as LCD panels or the like and projectors that provide a picture of the operation remotely for operator to control, through the vision obtained, so that the operation takes place and ends correctly. These operations are characterized because the operator lacks direct view of the development of the operation and obtains this vision through a complex video system, which gives the operator the flexibility to complete this task. Such operations require perfect vision in real time since the lack of this vision can lead to accidents.

The known systems use an annex electronic system that usually has an input video signal into a standardized format. The video signal is of quality, and is normally acquired by video cameras or high-resolution photon sensors located at the end of the device controlled by the operator, to facilitate decision making on position, distance and other parameters necessary for controlling the device for successful completion of the operation. The signal produced by cameras and/or sensors travels through a set of digital lines to transmit data to the place of presentation by the panel, the screen or the corresponding presentation device.

A typical example of these operations is refueling aircraft in flight. For cameras, the signal is collected by sensors which are impacted by photons from objects in the environment to produce an electrical signal that travels through channels to a point where image processing is to be sent back through to said channels to at least one electronic monitor that receives and sends to at least one display device.

The flight refueling systems are based on the use of three types of devices such as:
- Hose and Drogue: consisting in the use of a hose ending in a funnel-shaped basket as interconnecting device between a tanker aircraft and receiver apparatus or more, during flight.
- FRU (Fuselage Refueling Unit): similar to the above where a central and oversized hose is generally used for refueling.
- Boom: device that basically consists of a telescopic, extensible tube attached to the bottom of the tanker aircraft by a hinge element and which is movable by inserting the fins to the "nozzle" end of the tube or the receptacle of the receiver aircraft to supply fuel thereafter.

These are all intended to facilitate the passage of fuel from the tanker to the receiving aircraft. These types of refueling operations, as well as other so-called real time activities, are characterized by requiring low latency between actual events and the corresponding remote viewing monitor.

It is about operations considered critical since the operator visually monitors all steps and procedures remote location to ensure mission success by operating in real time from a set of devices and controls, and manipulates all these devices based on the visual information received until the operation is performed. This visual check is normally accomplished indirectly through electronic media, which causes a delay between the event and the display of the same, this delay must be as low as possible.

Whether in refueling operations in flight or on any other similar characteristics of demand or criticality requires the consideration and minimizing the delay between actual event and display thereof, it is essential to consider and evaluate the effect an image freeze can have on the operator who's visualizing them. The time until he can determine that there is a freeze and that subsequently needs to follow the established procedure in such situations can be vital or it can potentially generate catastrophic results.

Similar operations are also performed for all types of military or devices that somehow have some kind of remote control. Not only in the cases mentioned above, using any of the systems that have been previously mentioned, but also in any other situation where remote operations require instant vision as closely as possible to real time when the actual event is taking place, it is essential to ensure that the image of the video frames will flow without interruption from the camera to final presentation device where the supervisor should use this information to make decisions, such as what to do or how to manipulate the operating controls.

Because in many cases a considerable delay is not acceptable between the instant when the actual events occur and when the images of the same reach the operator, the capacity is needed to detect if the signal from the image sensors is frozen and to have the ability to switch from one input signal to another in case of said alternative is available. Both capabilities are the subject of this invention.

On occasions, cameras with a refresh rate different from that required to feed the monitor are used, for purposes such as to prevent flickering or similar and undesirable effects on the presentation. To get the correct number of image frames needed by the screen, a memory buffer is used to temporarily store data and be able to repeat up to the desired frequency.

Also, at times, cameras or other devices that are on the route to the final presentation require some image processing that requires the use of a memory to store the frame, to which a series of mathematical transformations are applied, to obtain the desired results.

On other occasions, for increasing the sensitivity of the sensors, we have to increase the size of the sensing pixels using some kind of grouping of basic pixels of the sensor or "binning", which ends leading to the need for resorting to a new memory for storing the pixels.

In either of the above cases and others similarly, the existence of a memory for storing the image data generates the risk of freezing the image in the final presentation device. This may result in a malfunction of the system consisting of a lock or freeze of all or part of the video image, which produces an undesired delay between the actual event and the vision that the operator has of the same.

This delay could result in a disaster, so it is completely unacceptable in many applications, from the point of view of safety, when there is no mechanism for detection or indication and even after selecting an image of alternative video to avoid losing sight of the actual scene work. Another optional improvement introduced in the present invention consists precisely in the use of several sources of alternative video signal from various sensors. Once freezing or video loss is detected, the system can switch between them to ensure that there is always a vivid picture in real time with which to work.

Even in 3D systems, where two images are overlaid to obtain a mixture of two corresponding images one by each eye and spectacles are responsible for conveniently distributing it, is interesting to ensure that when an image sensor is frozen or disappears, the system continues creating something that does not disturb or deceive the user. In case of failure of any eye image for loss or freeze, the system automatically switches to a 2D image by repeating the image for both eyes of the image still live. This allows, in most cases, to continue the operation without major problems.

The point of the system is that if there are no alternative input signals, at least it warns the user from freezing, allowing him to save precious time when deciding how to proceed.

In such critical operations of supervision or control, the operator cannot waste time, because such waste of time may create a risk to the success of the operation and cause an accident. Therefore, in situations of signal problems as described above, a monitoring system that not only avoids the frozen images, but also informs and selects the source to present, are considered properties and are objects of this invention.

Moreover, if a cable or conveyance of the signal path is broken or damaged, the system should also detect the loss of signal by analyzing its integrity.

What is proposed in this invention is a monitoring system that in its most basic version it will be reduced to a single monitor, redundant and robust from the functional perspective by resolving all potential risks mentioned above, In more advanced versions also described in this invention, it will have several display elements that will provide a 3D vision of the events, and can switch to 2D in case of failure in any of the input video signals.

The present invention therefore aims to solve all these potential problems, based on electronic design, for these purposes, by providing the desired characteristics. At the same time a method or process is proposed for detecting freezing.

### BRIEF DESCRIPTION OF THE INVENTION

On the outset, the present invention is directed to a system for monitoring critical operations where loss or freezing of pictures is not acceptable and may compromise the success of the mission or task.

The system is composed of all or some of the following elements:
- One or more devices for the retrieval of video images, preferably cameras or photon sensors.
- One or more conventional devices for the handling of video.
- One or more boxes to house all electronic devices and image display system if necessary.
- A display panel or other display device for displaying images.
- Some electronics that has some or all of the following:
   - Redundant power supply.
   - Many power inputs.
   - Many video signal inputs.
   - Detection subsystem for verifying video received is correct.
   - Subsystem for detecting frozen images or parts of them.
   - Switching subsystem for the selection of an alternate input for the video signal.
   - Subsystem for the generation of overlays or graphic information on the screen or display panel.
   - User information subsystem to display system failure-s.
   - Auxiliary signaling elements such as lights or sound (LEDs based or similar).
   - Subsystem for external communications for sending additional information about status, errors and system operation.
- An algorithm that automatically controls some or all of the previous characteristics.

Deploying all of the above subsystems may be done with elements that perform one or more of the above features, but it is important that they do not introduce errors as freezing or loss of video signal.

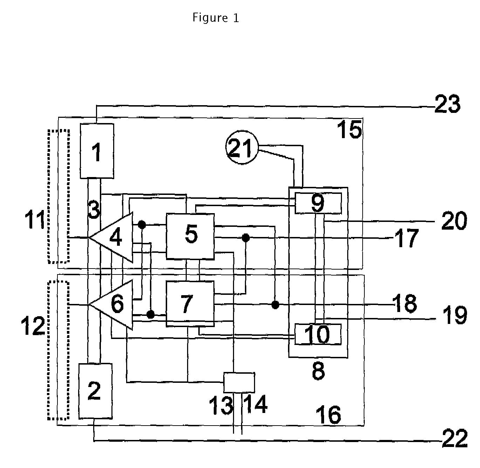

An implementation example of the above is reflected in Figure 1.

According to the invention, the images sent to the display device will not have, by virtue of the design itself, the ability to freeze, but if this happens because of an error in the input video signal from outside the system, the last step is responsible for detecting and switching to other suitable signal to avoid such malfunction. At the same time it will inform the operator immediately and in several ways of such a situation so that it can undoubtedly take corrective action as appropriate.

An obvious advantage of the invention is the possibility that the system automatically selects between the input video signals by finding one that does not have the problems associated with the freezing error or signal loss detected. It will be recommended for obvious reasons that the input signals be different and independent.

According to another aspect of the invention, a method for performing the functions of detection of freezing by a crypto algorithm is therefore proposed.

### BRIEF DESCRIPTION OF THE DRAWINGS

The preceding objectives and many of the advantages of this invention, will become more apparent and will be appreciated and understood more clearly from the detailed description of the invention that follows; together with the figures and drawings which are subsequently inserted and include:
**Figure 1** shows a detailed schematic view of the components of the system, object of the invention.

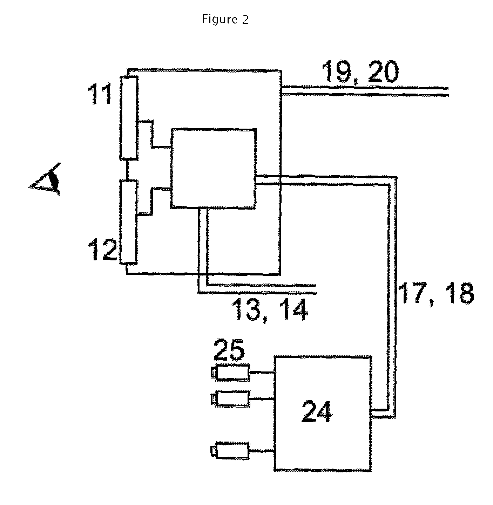

**Figure 2** shows a schematic overview of the viewing system from the input sensors where the real-world images are collected in cameras (25) are processed in a system for image processing (24) and sent to the final system display (11) and (12) in which the user will get the correct information about the environment or operating scenario.

The object of this invention would be represented schematically in Figure 1 for the numbered items except for the display elements 11 and 12 but could be part of the system, including and even be included in the same. Box-s (15) and (16) are not part of the invention.

### DETAILED DESCRIPTION OF THE INVENTION

When a monitor is used to supervise critical operations, there are requirements or objectives to be met, apart from being able to modify its brightness, intensity, etc. and be independent even of its picture quality. The most important of all is to avoid the risks and damage that could occur as a result of the loss or the total or partial freezing of the image. In this invention, these objectives are met by three key features:
First, by using a reliable design that cannot physically freeze the images within the system. This can be achieved by analyzing the signal that feeds and controls memory and internal storage through setup and use of the same by a ping-pong type procedure and with the use of subsidiary records to ensure the final objective of no internal freezing.

But that feature, if it is convenient and interesting, it is not the main objective of this invention. Second, by creating an electronic mechanism placed in the last stage between the display device and the rest of the system to detect any frozen part of the picture and inform the user about this fact. For that purpose this invention proposes obtaining and storing parts of the image frame that will be compared with those of the following tables and the result is used to determine whether or not there is freezing. This detection is performed, as has been said before, in the last stage of the system, before sending the signal to the display or device for final presentation. If it's not possible to correct internal freezing, this detection will inform us of the existence of freezing in the input video signal in use by a panel of lights and/or sounds. This is the basic and fundamental idea of the present invention.

In third place by an additional selection mechanism driven by an algorithm that once a frozen image is detected, it switches to a different input or alternatively if no additional video source is present it shall advise the user in different ways. In this case the operator shall proceed according to the procedures established to avoid any negative consequences that might arise from this situation.

The electronic devices may be implemented by one or more FPGAs, or even with the aid of one or more micro-controllers or processors.

The proposed manners, but not exclusive for informing the operator, are the use of overlays generated by the electronics themselves and will advise by using lights and/or sounds. The operator must always consider the measures to take based on this information, even leading to abort the operation.

It is also important to consider the redundancy of the various system resources and in this sense the present invention provides in one of its claims the redundancy of other resources that compose it.

Another improvement introduced in the monitoring system, object of the present invention, is the use of redundant signal series for control and for video, independent of the redundancy of the other elements or features. Examples of these formats would have a preferred implementation based on RS422 for commands and data and HD SDI video signal. Such formats allow easy selection and easy conversion to optical, greatly improving the range of signals and reducing the likelihood of errors in these channels. This would result in an additional advantage that allows placing the display item at a greater distance from the rest of the system that provides signals to be displayed.

The commands to control aspects such as brightness or color intensity can be sent by a line series or embedded in the same series of video link as auxiliary data, which would reduce the input connectors to the system.

The system is based in the use of the following elements:
- Some acquisition means for video (25) which may be cameras or photon sensors or any others that allow real-time imaging.
- A conventional image processing system (24).
- A box or a set of boxes (15) and (16), where most of the elements are housed and protected.
- Signal converters (4) and (6) for converting input image data in the appropriate format to the screen-s or display elements (11) or (12).
- Signal processors (5) and (7) to be implemented with FPGAs for example, to obtain information from the images that enter (17) and/or (18) analyzed for symptoms of freezing or loss of image and create an overlay on the screen-s and send an indication to the lights (21) to alert the user of this situation. Electronics must also take control and select another input (if available) not showing the above errors. This functionality may make it through one or more micro-controllers (9) or (10), which will act as one in a master/slave configuration, as depicted in figure (8).
- Redundant power supplies fed by lines (22) and (23), represented by (1) and (2) that behaves as a single (3) to power the rest of the elements and in case of a failure of any of them it would not only be detected and reported, but also continue to give power to the system whenever any of them still live.
- Reset inputs (13) and (14) that in extreme cases, such as crashes by gamma radiation or high electromagnetic fields, will reset the system from the outside.

All events, including errors and failures, will be detected by the hardware and reported by the block (8) formed by one or more processors, through two (for redundancy) interfaces represented in the figure as (19) and (20).

The warning error lights (21), which may be LED, are redundant for any indication that seeks to give and its mission is to inform of any transcendent event.

In a second aspect, the invention is in part realized by implementing a method of detecting the freezing and lack of video that will be implemented using the corresponding algorithm, such that said algorithm must contain the following steps:
a) Initialization of variables.
b) Lack of video detection.
c) Freeze detection.
d) If either of the two previous errors arise, select an alternate input, if exists, and indicate either acoustically and/or by light as well as generating overlays over the image in the screen-s.

In a preferred method, this algorithm is implemented in an electronics FPGA; although, it could be programmed into a microcontroller or a similar form.

Freezing is detected based on the storage of certain areas of the picture frame to later compare with the corresponding subsequent frames and calculating the number of matches to conclude that there has been or not enough to suspect and indicate the existence of freezing.

Although the present invention has been fully described in a general scope and particularized sometimes with options, uses and preferred embodiments, it is obvious that modifications or special features may be introduced into the specific scope and should not be considered as different implementations or as limitations on the use of the same.

## Claims

1. An electronic display in real time to prevent total or partial freezing of images during critical operations, characterized because it comprises:
- At least one device for capturing video images in real time.
- At least one conventional processing system for such images.
- At least one display device such as a display panel (LCD or similar) or projector to generate images originating from at least one remote imaging device (sensor).
- Electronics, to adapt the input signal to that required by the display, and capable of applying a detection algorithm for detecting freezing and to inform the user of this situation. This algorithm is basically structured in a method of partial information storage of the frames and comparing it with the next frame or frames to deduce from this result the existence of freezing.
- One or many boxes where to store the previous elements.

2. A system according to claim 1, **characterized by** being configured such that its electronics could also detect the loss of the video signal.

3. A system according to any preceding claims, **characterized by** being further comprised of more than one video input selection and ability to choose between them when failure by freezing or image loss in any of the same is detected.

4. A system according to any preceding claim, **characterized by** being configured such that its electronics could also inform by other means such as lights or communication via series of loss and/or freezing of the video input signal and also to report the same.

5. A system according to any preceding claim, **characterized by** being provided with additional redundancy in one, several or all components of the system: the power supply, the monitoring system, the LCD panel or image projector or display system whichever it is, the input signal selector, etc.

6. A system according to any preceding claim, **characterized in that** its video inputs are of the series type to facilitate multiplexing or selection between the same and for easy conversion to optical.

7. A system according to any preceding claim, **characterized in that** its video inputs and communication with the outside are included in a single signal thereby leaving the control commands and the data multiplexed through the system so that same channel will only lack this type of input/output system (apart from the power and reset) for full operation.

8. A system according to any preceding claim, **characterized by** having optical video and data inputs.

9. A system according to any preceding claim, **characterized by** having some type of LCD panels arranged adjacently in line so that when one of them fails, the other can take its place automatically by being behind it and by being able to even see its image through the front.

10. A system according to any preceding claim, wherein the means for displaying the images are image projectors plus projection screens.

11. A system according to any of the preceding claims, **characterized by** its use for the operation of air refueling.

12. A system according to any preceding claim, **characterized by** having electronic overlays that can draw the image for the user to provide additional information.

13. A system according to any preceding claim, **characterized in that**, in addition, it will have light and/or sound for auxiliary and redundant information to inform the user.

14. A system according to any preceding claim, wherein the redundant light information to inform the user is LEDs.

15. A system according to any preceding claim further provided with one or more internal micro-controllers to display the outside of the activity, the state and the system operation mode.

16. A system according to any preceding claim in which the communication channel is also used to receive commands and instructions from outside to change their behavior.

17. A system according to any preceding claim in which the communications channels is redundant.

18. A system according to any preceding claim, **characterized in that**, in addition, it has an input for reprogramming or reconfiguration of micro-controllers and FPGAs of their electronics from the outside.

19. A system according to any preceding claim, **characterized in that** two displays for presentation are used to generate a 3D image, and when if an image of a monitor fails then it switches to another image and therefore has the advantage of allowing the operator to follow viewing images that do not confuse the operator or that do not involve the loss of vision in one eye.

20. A system according to any preceding claim, **characterized in that** is provided with sufficient capabilities to implement an algorithm for detecting frozen images and that implements a method comprising the following features:
a) Storage of certain parts or sets of pixels in a frame or frames on the input signal.
b) Comparison with similar parts or sets of pixels of the current or next frame stored according to the above point.
c) Accounting for the differences obtained by comparing information from points a and b.
d) Selection of an alternative, optional input, in case that the number of discrepancies does not exceed a certain value.

21. A system according to claim 20, wherein the algorithm for detecting frozen images also has the added ability to detect the presence or absence of a proper video signal and proceeding in accordance with section c of claim 20, also in the case of detecting bad video signals.

22. A system according to claims 20 or 21 characterized because it has the added ability to switch between the video input signals.

23. A system according to claims 20 to 22 characterized because the algorithm for detecting frozen images has the ability to generate information overlays superimposed on the image to report system status.
